# EUROPEAN PATENT APPLICATION

(11) **EP 4 209 414 A1**
(43) Date of publication of application: **12.07.2023**
(21) Application number: 22150282.6
(22) Date of filing: 05.01.2022
(51) Int. Cl.: B64C 7/02, B64D 27/02, B64D 29/02, B64D 27/24, B64C 5/02, B64C 29/00

(54) **VERTICAL TAKEOFF AND LANDING AIRCRAFT**

(71) Applicant: Zuri.com SE, 14000 Praha 4 (CZ)
(72) Inventor: Illich, Michal, 14700 Praha 4 (CZ); Kapoun, Tomas, 75201 Kojetin (CZ)
(74) Representative: Harber IP s.r.o.

(57) **Abstract**

The invention provides a vertical takeoff and landing aircraft having a fuselage (1) ending with a tail (11), a first wing (2) fixedly attached to the fuselage (1), a second wing (3) fixedly attached to the fuselage (1) and located between the first wing (2) and the tail (11),
wherein the first wing (2) is provided with four tilting propulsion units (21) forwards of the first wing and attached to the first wing;
wherein
the second wing (3) is provided with four tilting propulsion units (31) forwards of the second wing and attached to the second wing; or
the second wing (3) is provided with two tilting propulsion units (311) forwards of the second wing and attached to the second wing, and additional two non-tilting propulsion units (312) are provided behind the first wing;

wherein each propulsion unit is provided with propeller blades and wherein the propeller blades forwards of the first wing are at least 10 % longer than the propeller blades on the second wing and/or behind the first wing; and
wherein the propeller blades of the tilting propulsion units have variable pitch.

## Description

### Technical field

The present invention relates to a vertical takeoff and landing aircraft, preferably driven by electrical motors.

### Background Art

Vertical takeoff and landing aircrafts (VTOLs) are aircrafts which can hover, take off and land vertically. First VTOLs (primitive helicopters) flew in the beginning of the 20th century, and many constructions of VTOLs have been proposed since.

Non-helicopter VTOLs typically have a fuselage, at least one wing, and use propulsion units, such as propellers, tilting propellers or jet lifts, for powering the flight. The propellers or tilting propellers may have the form of open propellers or ducted fans. Some VTOLs known in the art are equipped with tilting wings. Several known construction concepts of VTOLs are briefly summarized herein below.

The lift-and-cruise concept uses two types of propulsion units, in particular, two different types of location and routing of propulsion units. The first type of propulsion units allows vertical movement (takeoff and landing, lift). The second type of propulsion units is a set of propellers which may be driven by electric motors and which allow forward movement when the aircraft, with the help of lift-dedicated propulsion units, rises to the desired flight level. These two types of propulsion units are independent of each other and are not mechanically connected in any way. A typical example of a lift-and-cruise concept is an aircraft technology called Cora, developed by Kitty Hawk Corporation, Mountain View, CA (US), described for example in US D843,306, US 10,364,036 B2 and US 10,364,024 B2.

Another known construction concept is a tandem tilt-wing concept which uses tilting of a main wing in the front and a smaller wing in the rear of the aircraft. The tiltable wings rotate in a limited range of approximately 0° to 90°, i.e. from a horizontal position to a vertical position. The propulsion units are firmly connected to respective wing. The tilting of the propulsion units is thus dependent on the tilting of the entire surface of the wing. Examples of the tandem tilt-wing concept are disclosed, e.g., in US 10,562,620 B2. In this concept, a failure of the tilting mechanism of the main wing is extremely dangerous as the main wing cannot generate any lift if it cannot be tilted to a horizontal position, and it is impossible to land if the main wing cannot be tilted to a fully vertical position. This is a very high risk to bear. Furthermore, the tilting of the main wing represents a huge mechanical strain on the main wing and its tilting mechanism. One of the previously published tandem tilt-wing solutions is Airbus Vahana.

Yet another known construction concept is a set of two or more tilt-rotors attached to one or more fixed wings ("tilt-rotors-only" construction). The rotors are tilted, including their drive units, which are small and light electric motors. An example of such concept is an aircraft by Joby Aero, Inc., disclosed e.g. in US 10,974,827 B2 or US 10,899,439 B2. The concept as constructed has four propulsion units coupled to a main wing, and two propulsion units coupled to an empennage, and all propellers are the same type and size.

VTOL aircrafts need to be improved for aerodynamics in the horizontal flight, power consumption in vertical flight and overall weight savings. The present invention aims to achieve these goals.

### Disclosure of the Invention

The present invention aims to overcome the drawbacks of the prior art and to provide a VTOL aircraft with cost-effective operation and reliable performance. In preferred embodiments, the present invention uses electric motors and aims to achieve an efficient power consumption and storage.

The present invention provides a vertical takeoff and landing aircraft having a fuselage ending with a tail, a first wing fixedly attached to the fuselage, a second wing fixedly attached to the fuselage and located between the first wing and the tail,
wherein the first wing is provided with four tilting propulsion units forwards of the first wing and attached to the first wing;
   wherein
   the second wing is provided with four tilting propulsion units forwards of the second wing and attached to the second wing; or
   the second wing is provided with two tilting propulsion units forwards of the second wing and attached to the second wing, and additional two non-tilting propulsion units are provided behind
   the first wing (and not attached to the second wing);
wherein each propulsion unit is provided with propeller blades and wherein the propeller blades forwards of the first wing are at least 10 % longer than the propeller blades on the second wing and/or behind the first wing; and
wherein the propeller blades of the tilting propulsion units have variable pitch.

In case there are the additional two non-tilting propulsion units provided behind the first wing but not attached to the second wing, these additional two propulsion units are typically attached to the first wing, behind the first wing. Preferably, these additional two non-tilting propulsion units are attached to pylons which also carry two of the tilting propulsion units located forwards of the first wing.

In the aircraft according to the invention, there are always eight propulsion units, two in each of the quadrants determined by the longitudinal axis and the lateral axis of the aircraft.

Typically, the second wing has a smaller surface area than the first wing.

An aircraft has three mutually perpendicular axes, as is generally known. The longitudinal axis is also called a roll axis and extends along the fuselage. The lateral axis is also called a pitch axis and extends along the first wing (main wing). The vertical axis is also called a yaw axis. The longitudinal axis and the lateral axis define four quadrants between them: front left quadrant, front right quadrant, rear left quadrant and rear right quadrant. In the present invention, each quadrant contains two propulsion units.

The term "propulsion unit" refers to open propellers. The propulsion unit may be tiltably attached to the wing (i.e., tiltable between a position with an axis of propeller rotation parallel with the longitudinal axis of the aircraft and a position with an axis of propeller rotation parallel with the vertical axis of the aircraft) - tilting propulsion units, or fixedly attached to the wing (i.e., non-tilting propulsion units).

The propulsion units may include two-, three-, or multi-bladed propellers. Propellers are devices for converting the torque produced by a motor into a force needed to propel the aircraft. Preferably, the tilting propulsion units include three- or multi-bladed propellers; and the non-tilting propulsion units preferably include two-bladed propellers.

The tilting propeller blades have variable pitch, which means that their pitch is adjusted according to changes in tilting position and flight speeds so that the propulsion efficiency is optimal under given conditions. The variable pitch refers to blades that can be rotated around their long axis to change the blade pitch.

Reducing the required power used in vertical and horizontal flight modes allowed by larger area of propellers generating lift and good cruise aerodynamics results in fuel savings, which positively affects the ecology, operating costs, and range.

The propulsion units are preferably attached to the wing via pylons. i.e., the propulsion unit is provided on a pylon which is attached to the wing, is substantially parallel with the longitudinal axis of the aircraft and extends forwards of the wing if the propulsion unit is located forwards of the wing, or extends behind the wing if the propulsion unit is located behind the wing. In some embodiments, one pylon on each side of the fuselage extends both forwards and behind the first wing, and bears a tilting propulsion unit forwards of the wing and a non-tilting propulsion unit behind the first wing.

The number of propulsion units forwards of the first wing is four, wherein two propulsion units are located on each side from the fuselage. In other words, the four propulsion units are arranged so that there are two propulsion units on one side from the fuselage (i.e., on the wing between the fuselage and one tip of the wing), and two propulsion units on the other side from the fuselage (i.e., on the wing between the fuselage and the other tip of the wing).

The total number of propulsion units located behind the first wing is four, wherein two propulsion units are located on each side from the fuselage. In some embodiments, of the four propulsion units located behind the first wing, all four propulsion units are attached to the second wing forwards of the second wing; or in other embodiments, two propulsion units are attached to the second wing forwards of the second wing and two propulsion units are attached to the first wing behind the first wing. In the latter case, it is preferred if the propulsion units attached to the second wing are closer to the fuselage than the propulsion units attached to the first wing behind the first wing.

The term "vertical take-off and landing aircraft" or "VTOL aircraft" refers to VTOL aircrafts for carrying passengers and/or cargo.

The term "fuselage" refers to the main body of the aircraft. The fuselage usually holds the pilot and passengers or cargo.

In this invention the fuselage is preferably positioned under the first wing, i.e., the first wing is attached to the upper portion (top) of the fuselage. However, the fuselage may also be positioned above the wing, i.e., the wing may be attached to the lower portion (bottom) of the fuselage.

Any shape, material and construction of the fuselage known for VTOL aircrafts can be used in the present invention. Particularly advantageous material for the fuselage is carbon fibre composite which is lightweight and has excellent stress characteristics. A particularly advantageous type of the fuselage is monocoque.

When this text refers to a "longitudinal axis" of the fuselage, the axis of the fuselage which extends along the largest dimension is meant. This is the axis which typically extends from nose to the tail of the aircraft and which is substantially identical or parallel with the longitudinal axis of the aircraft. The first wing is typically located symmetrically about the longitudinal axis of the fuselage / longitudinal axis of the aircraft.

The second wing is typically divided into two halves which are located symmetrically, each half on one side of the fuselage.

The term "wing" refers to a fin-like structure producing lift. In this text, the structure extending from a first wingtip to a second wingtip is considered to be one wing. In other words, a wing extends to both sides of the fuselage. A wing has a leading edge and a trailing edge.

When this text refers to a "longitudinal axis" of the wing, the axis of the wing which extends along the largest dimension is meant. This is the axis which typically extends from a first wingtip to a second wingtip and is substantially identical to the lateral axis of the aircraft.

A "pylon" is a longitudinal body attached to the wing (typically to the underside of the wing, but may also be placed in the plane of the wing or above the wing), which may carry components of the aircraft. In this invention, a pylon usually carries a propulsion unit (forwards of the wing or behind the wing) or two propulsion units (both forwards and behind the wing).

The pylons are oriented substantially in parallel with horizontal flight direction and with the longitudinal axis of the aircraft. This corresponds to the orientation of the pylons substantially perpendicularly to the lateral axis of the aircraft and to the orientation of the pylons substantially in parallel with a plane which contains the longitudinal axis of the aircraft and the vertical axis of the aircraft.

Typically, each pylon carries one propulsion unit mounted on the tip of the pylon forwards of the leading edge of the wing (= forwards of the wing) or behind the trailing edge of the wing (= behind the wing). In some embodiments, two pylons attached to the first wing of the aircraft, one on each side of the fuselage, may carry two propulsion units (both forwards and behind the wing).

The pylons may be arranged under the wing, and/or in the plane of the wing, and/or on the wingtip.

Preferably, the pylons on the second wing, and at least the internal pylons on the first wing (internal pylons = pylons closer to the fuselage) extend only aft (forwards) of the wing to which they are attached. The outer pylons (outer pylons = pylons further from the fuselage) on the first wing may extend both aft (forwards) and behind the first wing, or only aft (forwards) of the first wing.

The term "non-tilting" or "non-tiltable" means that the propulsion unit (in particular, propeller) is mounted fixedly in a specific position and cannot be tilted from this position into any other position. The term "tilting" or "tiltable" refers to movability of the propulsion unit (in particular, propeller) from a cruise flight powering position to a vertical flight powering position and vice versa.

The terms "forwards", "aft", "behind" are used relative to the horizontal flight direction.

In this text, the term "vertical flight" means a flight in a direction which is substantially perpendicular to the ground, i.e., a flight in a vertical direction. Typically, vertical flight is used for take off, hover and landing.

The term "cruise flight" means a flight in other than vertical direction. Typically, a cruise flight is a substantially horizontal flight in a given altitude. A cruise flight may include changes in heading of the flight.

The term "horizontal flight" refers to a flight in a given altitude with changes of heading and speed only.

The term "take-off" refers to a phase of the flight in which the aircraft gets airborne, i.e., from lifing off the ground to safe altitude. The take-off phase of a VTOL typically corresponds to a vertical flight.

The term "landing" refers to a phase of flight in which the aircraft comes to land. The landing phase includes manoeuvering to land and the touch-down instant. The landing phase of a VTOL typically corresponds to a vertical flight.

The term "climb" refers to a phase of flight in which the aircraft is increasing its altitude. This flight phase typically follows the take-off and precedes the horizontal flight, or may be in between two phases of horizontal flight in different altitudes.

The term "descent" refers to a phase of flight in which the aircraft is decreasing its altitude. This flight phase typically follows the horizontal flight and precedes the landing, or may be in between two phases of horizontal flight in different altitudes.

In a preferred embodiment, the propulsion units are driven by electric motors. An "electric motor" means herein a power unit that converts electric potential into kinetic energy of rotational motion. Electric motors may preferably be selected from commutator DC (direct current) motors, universal AC (alternating current) and DC motors, brushless DC motors, AC single-phase motors, AC three-phase induction motors (asynchronous), and synchronous motors.

The electric motors can be embodied as separate units powered and controlled by a central control system, or controlled by separate control units linked to a primary control unit.

In some embodiments, a propulsion unit may include an assembly comprised of two or more electric motors powering one propeller.

Preferably, eight electric motors are provided in an aircraft of the invention. This increases reliability of the aircraft in case of failure of a motor.

In some embodiments, the energy for powering the electric motors may be stored in batteries carried by the aircraft. The batteries may be, e.g., lithium-polymer (Li-Pol), lithium-ion (Li-ion), nickel-zinc (Ni-Zn), nickel-iron (Ni-Fe), lithium-sulphur (Li-S), or nickel-metal hydride (NiMH) batteries.

In preferred embodiments, the aircraft carries an electricity generator. The generator may be installed onboard the aircraft (e.g., in the fuselage or on the wing). In some embodiments, the generator comprises a gas turbine for converting mechanical and/or thermal energy of flowing gases into mechanical work for rotating a shaft of an alternator. In some embodiments, the generator comprises an engine, preferably an internal combustion engine, for rotating a shaft of an alternator. The alternator produces electric current for powering the electric motors. In some embodiments, the electricity generator may be a fuel cell, fuelled by hydrogen or methanol.

In some embodiments, the engine may use fuel selected from liquefied hydrogen, compressed natural gas (CNG), hydrocarbon heating mixture (propane-butane, LPG), plant-based biofuel, conventional aviation fuel, aviation kerosene, and aviation gasoline.

Excess electricity produced using an electricity generator but not currently needed for powering electric motors, may be stored in an electricity accumulation device. During critical phases of flight, such as the vertical take-off and landing, a transition from vertical to horizontal flight mode or flight in complex meteorological conditions, the stored electrical energy provides a necessary power reserve for the electric motors.

Excess electricity can be stored preferably in electrochemical batteries suitably located in the interior of the fuselage and wings of the aircraft. The batteries may be selected from lithium-polymer (Li-Pol), lithium-ion (Li-ion), nickel-zinc (Ni-Zn), nickel-iron (Ni-Fe), lithium-sulphur (Li-S), or nickel-metal hydride (NiMH) batteries.

The tilting of the propulsion units is preferably controlled by servomotors or by hydraulic units. Each servomotor or hydraulic unit controls the tilt angle of one propulsion unit. The servomotors or hydraulic units may be powered by electricity.

The present invention offers fundamental advantages over the prior art in terms of efficiency and safety of operation. The main benefit of this solution is the stabilization of the aircraft and improved efficiency due to excellent balance between the number of propulsion units and available area of propulsion units.

The efficiency of operation is crucial for ecology, operating costs, and especially the range of the aircraft. Therefore, efficiency is an important parameter that affects the ability of particular aviation technology to succeed commercially in the market.

A direct comparison of the VTOL aircraft construction according to the present invention with the prior art constructions used in VTOL aircraft passenger and cargo transport or as concepts is presented herein below. All the comparisons assume that the drive units are electric motors.

Compared to the lift-and-cruise construction, the number and arrangements of propulsion units on the first and second wings according to the invention provides for a better aerodynamics in the cruise flight and for reduction of the aircraft weight. Computer simulations and calculations assessing aircrafts of the same size at the same speed show that the aerodynamics in the cruise flight, expressed as cD0 (drag coeficient at the zero lift) is 30 % lower for the aircraft of the present invention, compared to the lift-and-cruise concept.

To be specific, a four-seater VTOL airplane, with approximately 2 tonnes and wingspan of 12-13 meters with a cruise speed of 70 m/s was analyzed. For this configuration the lift-and-cruise construction with 4 pylons bearing 8 propulsion units for vertical take-off and 1 propulsion unit for horizontal flight was considered as prior art. The construction of the present invention with 4 tilting propulsion units on the first wing and 4 tilting propulsion units on the second wing was considered for the comparison.

The considered lift-and-cruise prior art construction had cD0 of 0.05, resulting in lift/drag ratio up to 9.5. The considered construction according to the present invention had cD0 of 0.035, resulting in a lift/drag ratio up to 13.3. This difference was partially caused by the smaller pylons (tilt-rotors require a smaller pylon extending aft of the wing compared to a necessarily massive pylon extending aft of the wing as well as behind the wing needed for the lift-and-cruise configuration). A significant improvement was caused by the propellers configuration according to the invention. While the lift-and-cruise has the lift propellers unused in the horizontal flight and causing unnecessary drag, the construction according to the invention uses all propellers in all flight modes.

For the configuration with four tilting propulsion units on the first wing, only two tilt-rotors on the second wing and two non-tilting rotors behind the first wing, the computational fluid dynamics (CFD) analysis showed less drag from the tail (compared to the previous variant with four tilting propulsion units on the second wing) thanks to the smaller size of the second wing and higher drag from the extended pylons and non-tiltable propulsion units behind the first wing. These two factors canceled each other, resulting in a cD0 of 0.035 again for this variant.

Furthermore, the calculations showed 8.7% reduction in the weight, due to the aircraft of the present invention using fewer electromotors, needing smaller pylons to hold the propulsion system and generally using every component in at least the vertical phase of the flight and using all tilting propulsion units in every phase of flight - compared to the lift-and-cruise construction which uses part of the components solely for vertical flight and another part of components solely for horizontal/cruise flight. Specifically, for the considered four-seater aircraft, the main weight savings come from removing the propulsion unit dedicated for horizontal flight (consisting of a powerful 72 kg electromotor, 28 kg ESC and 30 kg propeller). With other changes, such as replacing long pylons with smaller ones, adding tilting mechanisms, changes in the wing structure and reduced fuel tank enabled by the aerodynamic improvements, the overall weight change was from approximately 2300 kg for the lift-and-cruise construction to 2100 kg for the construction according to the invention.

Compared to the tandem tilt-wing construction, the aircraft construction according to the present invention is less technically demanding, more reliable, and simultaneously more cost-effective.

The tilting of the entire main wing (referred to as "first wing" in the present disclosure) is particularly problematic, especially concerning the enormous forces that strain the rotating mechanisms of the main wing, which essentially carry the entire weight of the aircraft. In case of failure of the tilting mechanism of the main wing and thus the impossibility to set the main wing to a horizontal position, it is challenging to fly as the main wing cannot generate any lift. In case of failure of the tilting mechanism of the main wing and the impossibility of setting the main wing to a fully vertical position, it is not possible to land. Practical problems with tilting the main wing are demonstrated by the abandonment of such projects. So far, no tandem tilt-wing construction was introduced into practical use.

Compared to configurations with 6 tilting propulsion units only, such as Joby S4 mentioned above, the present invention has better redundancy, safety and weight savings.

This is because when there is a failure of one propulsion unit in a vertical flight mode, another unit in the opposing position must be also shut down (or thrust of multiple propulsion units lowered) and other units work substantially more to maintain the balance of the aircraft. So if the aircraft has 6 propulsion units, in the case of failure of one unit, there are 4 propulsion units working fully (in some constructions 5 propulsion units are working, but their thrusts and torques are distributed non-uniformly in a way to compensate for the failure). Those remaining propulsion units must provide thrust up to 1.5x higher than in the non-failure state (6/4=1.5).

In case of 8 propulsion units according to the present invention, if one propulsion unit fails and the opposing propulsion unit is switched off consequently, 6 propulsion units (or their equivalent) are still working fully. They must provide thrust up to 1.33x higher than in the non-failure state (8/6=1.33). The weight of the electromotor and its controller are linear to their maximum sustainable power and torque. So a 6-propulsion unit aircraft has motors calculated for 1.5x of their nominal power (for thrust of 1/6 of the weight of the aircraft) plus additional margin for stability and control. The 8-propulsion unit aircraft has motors calculated for 1.33x of their nominal power (for thrust of 1/8 of the weight of the aircraft) plus additional margin for stability and control. So the present invention has weight savings of 11 % (1.33/1.5=0.889) in the motors and inverters compared to the 6-propulsion unit designs.

Compared to the concepts with more propulsion units (usually 10, 12 or more) the present invention has also advantages, derived from the geometry of the airplane. The influence of the number of propulsion units forwards of the first wing is discussed first.

A 12-meter wingspan airplane with a 2-meter wide fuselage (including safety margin near the fuselage) is taken as a comparative example. Then there are 10 meters of span forwards of the wing (provided the propellers do not spread outside the wingspan of the wings). With four propulsion units, each propulsion unit can have a maximum diameter up to 2.5 meters, which is a propeller area of 4.9 m² for each unit. With six propulsion units, each propulsion unit can have a maximum diameter of 1.66 meters, which gives a propeller area of 2.16 m² for each unit.

For a vertical takeoff and landing aircraft, a disc loading of 50 kg/m² to 100 kg/m² is usually used. Disc loading is a ratio between the thrust generated by the propeller compared to the propeller area. The mentioned disc loading range allows a good compromise between efficiency (which is better at low disc loadings) and space needed.

With 4.9 m² of propeller area, the provided thrust is between 245 kg and 490 kg for each propeller, that is a total of 980 kg to 1960 kg of thrust for the four propellers in the front. That is quite optimal for an aircraft of this size which has a weight of 2000 kg, where at least half of the total thrust is generated by the front propellers.

With 2.16 m² of propeller area, the provided thrust is between 108 kg and 216 kg for each propeller, that is a total of 648 kg to 1296 kg of thrust for the six propellers in the front. That is 34 % less compared to the embodiment in accordance with the invention and insufficient for an airplane of this size.

The same argumentation applies to the rear of the aircraft also, again four propulsion units are optimal. More units do not cover enough area and thus have too little thrust. Less units have insufficient redundancy in case of a failure.

In the present invention, the propellers in the front (forwards of the first wing) have a larger diameter than the propellers in the back (behind the first wing, including those attached to the second wing). That is because they are closer to the center of gravity of the aircraft. In most airplanes, the center of gravity is typically located slightly in front of the center line of the first wing. The propellers on the second wing are farther from the center of gravity - so to provide the same moment of force (force multiplied by distance from the center) they have to provide less thrust. When the disc loading is the same for all propellers, the ones with less thrust have also a smaller diameter.

Compared to VTOL aircraft constructions known in the prior art, the construction of the present invention provides for a more effective operation, lower energy consumption and better comfort for the pilot and passengers.

### Brief Description of Drawings

Fig. 1 shows an aircraft according to a first example of the invention, in an axonometric view, with the tiltable propulsion units tilted into a vertical flight position.
Fig. 2 shows the aircraft of Fig. 1 in an axonometric view, with the tiltable propulsion units tilted into a cruise flight position.
Fig. 3 shows an aircraft according to a second example of the invention, in an axonometric view, with the tiltable propulsion units tilted into a vertical flight position.
Fig. 4 shows the aircraft of Fig. 3 in an axonometric view, with the tiltable propulsion units tilted into a cruise flight position.

### Example

The invention is further illustrated by way of two examples which should not be construed as limiting the scope of the protection, and with reference to the attached drawings.

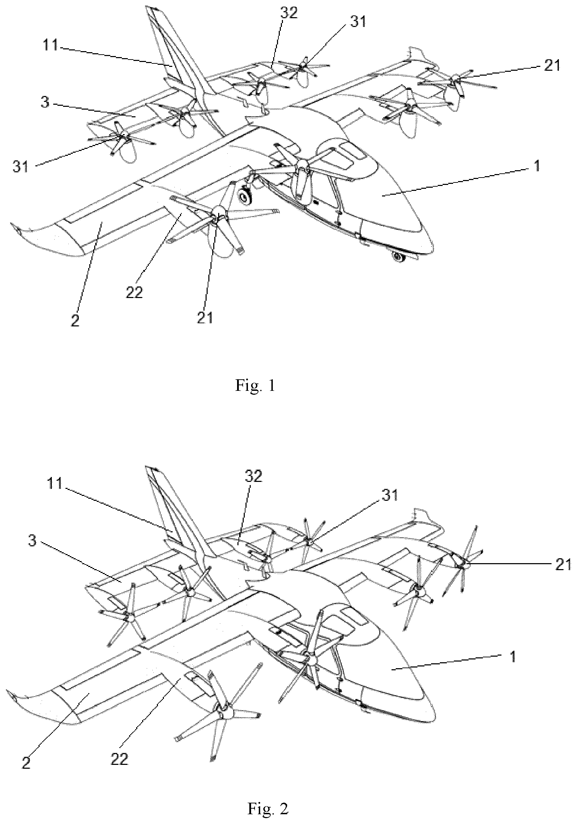

Fig. 1 and Fig. 2 show a first example of a vertical takeoff and landing (VTOL) aircraft having a fuselage 1 ending with a tail 11, a first wing 2 fixedly attached to the fuselage 1, a second wing 3 fixedly attached to the fuselage 1 and located between the first wing 2 and the tail 11, wherein the first wing 2 is provided with four tilting propulsion units 21 attached to the first wing and forwards of the first wing and the second wing 3 is provided with four tilting propulsion units 31 attached to the second wing 3 and forwards of the second wing. The second wing 3 has a smaller surface area than the first wing 2 and the propeller blades of the propulsion units 31 are shorter than the propeller blades of the propulsion units 21. The propulsion units 21, 31 are open propellers and have variable pitch.

The propulsion units 21, 31 are attached to the wing via pylons 22, 32, respectively. The pylons 22, 32 as shown in Figs. 1 and 2 are located in the plane of the wing and extend aft of the wing to which they are attached.

The propulsion units are driven by electric motors. Any of commutator DC (direct current) motors, universal AC (alternating current) and DC motors, brushless DC motors, AC single-phase motors, AC three-phase induction motors (asynchronous), and synchronous motors can be used in this embodiment.

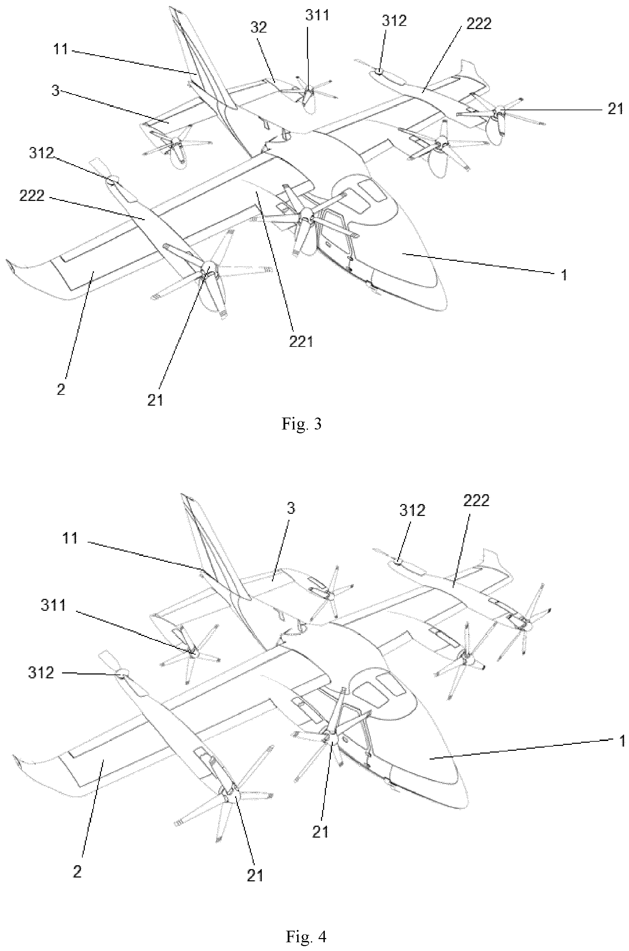

Fig. 3 and Fig. 4 show a second example of a vertical takeoff and landing (VTOL) aircraft having a fuselage 1 ending with a tail 11, a first wing 2 fixedly attached to the fuselage 1, a second wing 3 fixedly attached to the fuselage 1 and located between the first wing 2 and the tail 11, wherein the first wing 2 is provided with four tilting propulsion units 21 attached to the first wing and forwards of the first wing. The first wing is also provided with two non-tilting propulsion units 312 attached to the first wing and located behind the first wing. The second wing 3 is provided with two tilting propulsion units 311 attached to the second wing 3 and forwards of the second wing. The second wing 3 has a smaller surface area than the first wing 2 and the propeller blades of the propulsion units 311 and 312 are shorter than the propeller blades of the propulsion units 21. The propulsion units 21, 311 and 312 are open propellers. The propulsion units 21, 311 and 312 are attached to the wing via pylons 221, 222, 32, respectively. The pylons 221 and 32 are located in the plane of the wing and extend aft of the wing to which they are attached. The pylons 222 are located in the plane of the wing and extend both aft and behind the first wing to which they are attached.

The propulsion units are driven by electric motors. Any of commutator DC (direct current) motors, universal AC (alternating current) and DC motors, brushless DC motors, AC single-phase motors, AC three-phase induction motors (asynchronous), and synchronous motors can be used in this embodiment.

In both examples, two rotors are located in each quadrant wherein the quadrants are determined by the longitudinal (roll) axis and lateral (pitch) axis.

## Claims

1. A vertical takeoff and landing aircraft having a fuselage (1) ending with a tail (11), a first wing (2) fixedly attached to the fuselage (1), a second wing (3) fixedly attached to the fuselage (1) and located between the first wing (2) and the tail (11),
wherein the first wing (2) is provided with four tilting propulsion units (21) forwards of the first wing and attached to the first wing;
wherein
the second wing (3) is provided with four tilting propulsion units (31) forwards of the second wing and attached to the second wing; or
the second wing (3) is provided with two tilting propulsion units (311) forwards of the second wing and attached to the second wing, and additional two non-tilting propulsion units (312) are provided behind the first wing;
wherein each propulsion unit is provided with propeller blades and wherein the propeller blades forwards of the first wing are at least 10 % longer than the propeller blades on the second wing and/or behind the first wing; and
wherein the propeller blades of the tilting propulsion units have variable pitch.

2. The vertical takeoff and landing aircraft according to claim 1, wherein the second wing (3) has a smaller surface area than the first wing (2).

3. The vertical takeoff and landing aircraft according to claim 1 or 2, wherein the propulsion unit (21, 31, 311, 312) is an open propeller.

4. The vertical takeoff and landing aircraft according to any one of claims 1 to 3, wherein the propulsion units (21, 31) are attached to the wing (2, 3) via pylons (22, 32), wherein each pylon (22, 32) carries one propulsion unit (21, 31) mounted on the tip of the pylon (22, 32) forwards of a leading edge of the wing.

5. The vertical takeoff and landing aircraft according to claim 4, wherein the pylons (22, 32) extend only aft of the wing (2, 3) to which they are attached.

6. The vertical takeoff and landing aircraft according to any one of claims 1 to 3, wherein the propulsion units (21, 311, 312) are attached to the wing (2, 3) via pylons (221, 222, 32), wherein two pylons (222) attached to the first wing carry each two propulsion units (21, 312), one propulsion unit (21) being mounted on the tip of the pylon forwards of a leading edge of the wing and one propulsion unit (312) being mounted on the pylon behind the wing; and the remaining pylons (221, 32) carry each one propulsion unit (21, 311) mounted on the tip of the pylon (221, 32) forwards of a leading edge of the wing.

7. The vertical takeoff and landing aircraft according to claim 6, wherein the two pylons (222) carrying each two propulsion units (21, 312) are outer pylons of the first wing.

8. The vertical takeoff and landing aircraft according to any one of claims 1 to 7, wherein the propulsion units (21, 31, 311, 312) are driven by electric motors.

9. The vertical takeoff and landing aircraft according to claim 8, wherein the electric motors are embodied as separate units powered and controlled by a central control system, or as separate units controlled by separate control units linked to a primary control unit.

10. The vertical takeoff and landing aircraft according to claim 8 or 9, wherein a propulsion unit (21, 31, 311, 312) includes an assembly comprised of two or more electric motors powering one propeller.

11. The vertical takeoff and landing aircraft according to any one of claims 8 to 10, wherein the aircraft carries an electricity generator installed onboard the aircraft.

12. The vertical takeoff and landing aircraft according to claim 11, wherein
- the electricity generator comprises a gas turbine for converting mechanical and/or thermal energy of flowing gases into mechanical work for rotating a shaft of an alternator, or
- the electricity generator comprises an engine, preferably an internal combustion engine, for rotating a shaft of an alternator, or
- the electricity generator is a fuel cell, fuelled by hydrogen or methanol.

13. The vertical takeoff and landing aircraft according to any one of claims 1 to 12, wherein the tilting of the tilting propulsion units (21, 31, 311) is controlled by servomotors and/or by hydraulic units.
